# EUROPÄISCHE PATENTSCHRIFT

(11) **EP 2 163 793 B1**
(45) Veröffentlichungstag und Bekanntmachung des Hinweises auf die Patenterteilung: **23.03.2011**
(21) Anmeldenummer: 08016314.0
(22) Anmeldetag: 16.09.2008
(51) Int. Cl.: F16H 61/36, F16H 63/48

(54) **Betätigungseinrichtung zum Schalten eines Getriebes und zur Aktivierung einer Parkbremse**
Actuation device for switching a gearbox and activating a parking brake
Dispositif d'actionnement destiné à la commutation d'un engrenage et à l'activation d'un frein de stationnement

(43) Veröffentlichungstag der Anmeldung: 17.03.2010
(73) Patentinhaber: Dura Automotive Systems GmbH, 40549 Düsseldorf (DE)
(72) Erfinder: Hoffmann, Karsten, 40880 Ratingen (DE); Beaufils, Dominique, 77310 Saint Farbeau-Ponthierry (FR)
(74) Vertreter: Paul, Dieter-Alfred

(56) Entgegenhaltungen:
- DE-A1- 3 203 653
- FR-A- 2 587 944
- US-A- 1 908 907
- US-A- 3 987 879
- US-A- 4 089 394
- US-A- 5 086 895

## Beschreibung

Die Erfindung betrifft eine Betätigungseinrichtung zum Schalten eines Getriebes und zur Aktivierung einer Parkbremse nach dem Oberbegriff des Anspruchs 1.

Kraftfahrzeuge, die für den Verkehr auf öffentlichen Straßen zugelassen sind, also insbesondere Pkw und Lkw, haben neben der über ein Fußpedal betätigten Betriebsbremse eine Parkbremse, über die die Bremsanlage unabhängig von der Betriebsbremse zwecks Blockieren des Fahrzeuges im Stand aktiviert werden kann. Vielfach ist die Parkbremse als sogenannte Handbremse ausgebildet, bei der die Parkbremse über einen von Hand zu betätigenden Parkhebel aktiviert wird. Dabei ist dem Parkhebel eine Parkkraftübertragungseinrichtung zur Übertragung von Parkkraft für die Parkbremse zugeordnet, wobei eine lösbare Blockiereinrichtung zur Festlegung des Parkhebels oder der Parkkraftübertragungseinrichtung in zumindest einer Parkstellung vorgesehen ist, meist in Form einer ratschenartigen Rasteinrichtung. Die Blockiereinrichtung kann dann zur Freigabe der Parkbremse durch Betätigung eines entsprechenden Knopfes gelöst werden.

Der Parkhebel wird gewöhnlich auf dem Mitteltunnel zwischen den Vordersitzen liegend und hinter dem Schalthebel angeordnet, so dass er bequem erreichbar ist. In der Regel sind Schalthebel und Parkhebel auf separaten Konsolen montiert. Im Stand der Technik sind jedoch auch Ausführungsformen bekannt, bei denen neben dem Parkhebel auch der für eine manuelle Schaltung vorgesehene Schalthebel auf einer gemeinsamen Betätigungskonsole angeordnet sind. Der Schalthebel kann innerhalb eines Schaltbewegungsbereichs für das Schalten der Gänge des Getriebes unabhängig von dem Parkhebel bewegt werden. Der Parkhebel hat einen eigenen Parkbewegungsbereich zur Aktivierung der Parkbremse.

Die vorbeschriebene, kombinierte Betätigungseinrichtung hat trotz der Anordnung beider Hebel auf einer Betätigungskonsole den Nachteil, dass sie aufwendig herzustellen ist und im Fahrzeug einen erheblichen Raumbedarf auf dem Mitteltunnel hat, so dass der Mitteltunnel kaum für weitere Einrichtungen, beispielsweise Becherhalter, Zigarettenascher oder dergleichen, Platz bietet.

Daneben sind für Gartentraktoren mit einer Betriebsbremse Betätigungseinrichtungen bekannt, bei denen über einen einzigen Betätigungshandhebel sowohl die Kraftübertragung vom Motor zu den Antriebsrädern zu- und abgeschaltet, als auch das Fußpedal der Betriebsbremse in Bremsstellung blockiert werden kann, um das Fahrzeug im Stillstand zu sichern (vgl. US 5,096,032 A). Eine solche Betätigungseinrichtung ist jedoch für Kraftfahrzeuge der oben genannten Art nicht zulässig, weil die Unabhängigkeit von Betriebs- und Parkbremse nicht gegeben ist.

Um den Raumbedarf zu verringern, ist es bekannt, Schalt- und Parkhebel zu einem einzigen Betätigungshandhebel zusammenzufassen, der sowohl in einem Schaltbewegungsbereich als auch in einem Parkbewegungsbereich bewegbar ist, wobei der Betätigungshebel in dem Schaltbewegungsbereich derart von der Parkkraftübertragungseinrichtung entkoppelt ist, dass eine Parkkraft nicht übertragbar ist, und wobei der Betätigungshandhebel in dem Parkbewegungsbereich von der Schaltkraftübertragungseinrichtung derart entkoppelt oder entkoppelbar ist, dass eine Schaltkraft nicht übertragbar ist. Solche Betätigungseinrichtungen sind beispielsweise aus der US 3,987,879 A1, DE 32 03 653 A1, US 1,908,907 A1, US 4,089,394 A1 und FR 2 587 944 A1 in verschiedenen Ausführungsformen bekannt. Nachteilig bei diesen Betätigungseinrichtungen ist, dass sie kinematisch so gestaltet sind, dass die Parkbremse bei Einlegung eines Getriebegangs gelöst wird. Dies ist insbesondere beim Anfahren am Berg problematisch.

Der Erfindung liegt die Aufgabe zugrunde, eine Betätigungseinrichtung der eingangs genannten Art so zu gestalten, dass Parkbremse und Schalten des Getriebes unabhängig voneinander geschehen kann.

Das Dokument US 3987879 A1 wird als nächster Stand der Technik angesehen und offenbart die Merkmale des Oberbegriffs des Anspruchs 1.

Diese Aufgabe wird erfindungsgemäß dadurch gelöst, dass die Schaltkraftübertragungseinrichtung wenigstens ein Schaltkraftübertragungselement und wenigstens ein Wählkraftübertragungselement aufweist und dass eine Wählkraftkopplungseinrichtung vorgesehen ist, mittels der das Wählkraftübertragungselement mit dem Betätigungshandhebel koppelbar und für dessen Bewegung in den oder im Parkbewegungsbereich entkoppelbar ist oder entkoppelt wird. Auf diese Weise wird bei Betätigung der Parkbremse eine Wählkraftübertragung vermieden, wenn zur Erreichung des Parkbewegungsbereichs eine Bewegung des Betätigungshandhebels in Richtung der Wählgasse notwendig ist. Schalten des Getriebes und Aktivierung der Parkbremse können unabhängig voneinander erfolgen.

Für die vorliegende Erfindung unerheblich ist es, ob der Schalthebel und die Schaltkraftübertragungseinrichtung für die Betätigung eines handgeschalteten oder eines Automatikgetriebes vorgesehen und ausgebildet sind, da die Kombination mit der Parkbremse für beide Ausführungsformen möglich ist. Auch ist es unerheblich, welcher Art die Schaltkraftübertragungseinrichtung und auch die Parkkraftübertragungseinrichtung sind, also ob sie die von Hand auf den Betätigungshandhebel übertragene Kraft rein mechanisch an das Getriebe bzw. die Parkbremse weitergeben oder vermittels elektrische Einrichtungen wie Sensoren, Stellmotoren etc.

Die Wählkraftkopplungseinrichtung kann mit einem Handbetätigungselement verbunden sein, über die die Kopplung und Entkopplung von Hand herstellbar ist. Das Handbetätigungselement ist zweckmäßigerweise am Betätigungshandhebel angeordnet, beispielsweise in Form einer auf- und abbewegbaren Schiebemuffe. Es besteht jedoch auch die Möglichkeit, eine zweckmäßigerweise elektrisch funktionierende Automatik vorzusehen, die jede Bewegung des Betätigungshandhebels in den Parkbewegungsbereich oder aus diesem heraus sensiert und beispielsweise mit einem Stellmotor die Wählkraftkopplungseinrichtung entsprechend ansteuert.

Unabhängig davon kann die Wählkraftkopplungseinrichtung einen beweglich geführten Kopplungsbolzen aufweisen, der im gekoppelten Zustand eine Kopplung zwischen Betätigungshandhebel und Wählkraftübertragungselement herstellt. Dabei ist es zweckmäßig, wenn der Kopplungsbolzen in Kopplungsstellung selbstkoppelnd ist, beispielsweise vermittels Federbeaufschlagung.

Nach einem weiteren Merkmal der Erfindung ist vorgesehen, dass die Wählkraftübertragungseinrichtung im Kraftfluss nach der Wählkraftkopplungseinrichtung ein Anschlag zugeordnet ist, der in gekoppeltem zustand der wählkraftkopplungseinrichtung eine Bewegung des Betätigungshandhebels in den oder im Parkbewegungsbereich blockiert. Erst nach Überführung der Wählkraftkopplungseinrichtung in die Freigabestellung ist dann eine Bewegung des Betätigungshandhebels in den Parkbewegungsbereich möglich. Auf diese weise ist gesichert, dass vor Betätigung der Parkbremse eine Entkopplung der Wählkraftübertragungseinrichtung durchgeführt wird.

In weiterer Ausbildung der Erfindung ist vorgesehen, dass Schalt- und Parkbewegungsbereiche nebeneinander liegen, so dass sie sich unmittelbar aneinander anschließen. Sofern der Schaltbewegungsbereich wenigstens eine Schaltgasse aufweist - eine solche Schaltgasse ist auch bei Automatikgetrieben gegeben, wenn auch meist nur eine einzige -, sollte der Parkbewegungsbereich über eine Bewegung des Betätigungshebels quer zur Schaltgasse erreichbar sein. Um Fehlbedienungen zu vermeiden, ist es darüber hinaus zweckmäßig, wenn die Parkkraftübertragungseinrichtung derart ausgebildet ist, dass der Betätigungshandhebel im Parkbewegungsbereich zur Aktivierung der Parkübertragungseinrichtung parallel zur Schaltgasse zu bewegen ist. Zur Betätigung der Parkbremse ist es dann erforderlich, den Betätigungshandhebel zunächst in einer Richtung und dann in eine dazu quer verlaufende Richtung zu bewegen.

Zur Aktivierung der Parkbremse sollte die Bremskraftübertragungseinrichtung einen in den Parkbewegungsbereich hineinragenden, schwenkbar gelagerten Parkkraftübertragungshebel aufweisen, der mit einem Parkkraftübertragungselement verbunden ist. Beim Einschwenken des Betätigungshandhebels in den Parkbewegungsbereich wird bei Ausübung der Parkkraft der in den Parkbewegungsbereich hineinragende Parkkraftübertragungshebel beaufschlagt, wobei das Parkkraftübertragungselement die Parkkraft mechanisch - oder auch elektrisch - auf die Parkbremse überträgt. Der Parkkraftübertragungshebel kann eine Schwenkachse haben, die sich parallel zur Bewegungsrichtung des Betätigungshandhebels beim Übergang vom Schalt- zum Parkbewegungsbereich erstreckt.

Um die Parkbremse in Parkstellung zu blockieren, ist in an sich bekannter Weise eine Blockiereinrichtung vorgesehen, die beispielsweise als Rasteinrichtung mit einem Klinkenhebel und einer Klinkenverzahnung ausgebildet ist, die mit dem Parkkraftübertragungshebel zusammenwirken. Zum Lösen der Blockiereinrichtung sollte der Klinkenhebel von Hand derart betätigbar sein, dass er in eine Freigabestellung bewegbar ist.

In der Zeichnung ist die Erfindung anhand eines Ausführungsbeispiels für ein handgeschaltetes Getriebe näher veranschaulicht. Es zeigen:

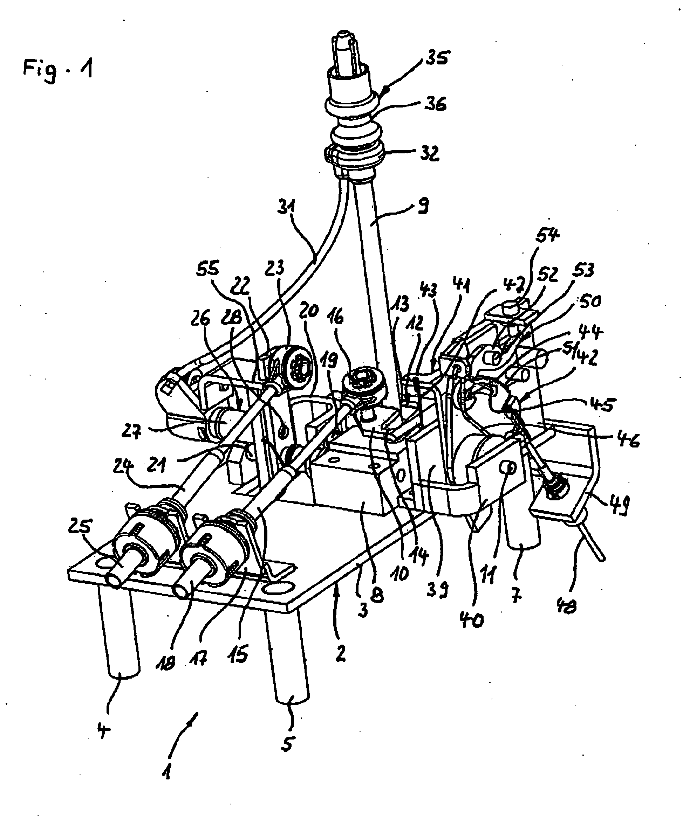

- Figur 1: eine perspektivische Ansicht der erfindungs- gemäßen Betätigungseinrichtung schräg von vorn;
- Figur 2: eine Seitenansicht der Betätigungseinrich- tung gemäß Figur 1;

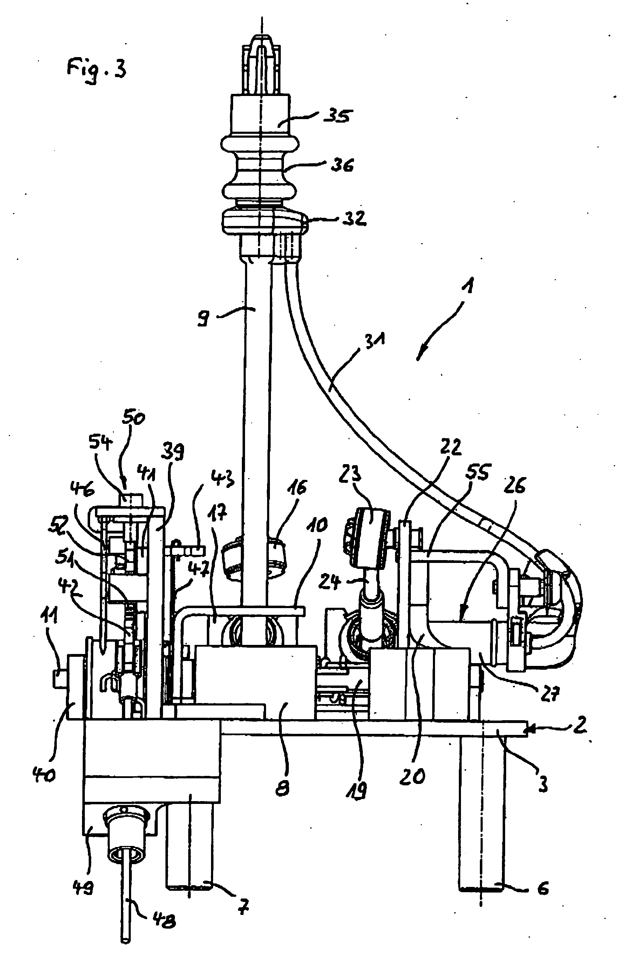

- Figur 3: eine Rückansicht der Betätigungseinrichtung gemäß den Figuren 1 und 2;
- Figur 4: eine Draufsicht auf dieBetätigungseinrich- tung gemäß den Figuren 1 bis 3;
- Figur 5: einen Querschnitt durch die Betätigungsein- richtung gemäßden Figuren 1 bis 4 in der Ebene A-A gemäß Figur 4;
- Figur 6: einen Querschnitt durch die Betätigungsein- richtung gemäß den Figuren 1 bis 5 in der Ebene B-B gemäß Figur 4.

Die in den Figuren dargestellte Betätigungseinrichtung 1 weist eine Betätigungskonsole 2 auf, deren Oberseite von einer Konsolenplatte 3 gebildet wird, welche auf vier Konsolensäulen 4, 5, 6, 7 ruht.

Auf die Konsolenplatte 3 aufmontiert ist ein Lagerblock 8, der innenseitig eine Kugelpfanne aufweist, in der das kugelförmig ausgebildete untere Ende eines Betätigungshandhebels 9 kugelgelenkartig gelagert ist. Der Betätigüngshandhebel 9 ragt nach oben hin aus dem Lagerblock 8 heraus.

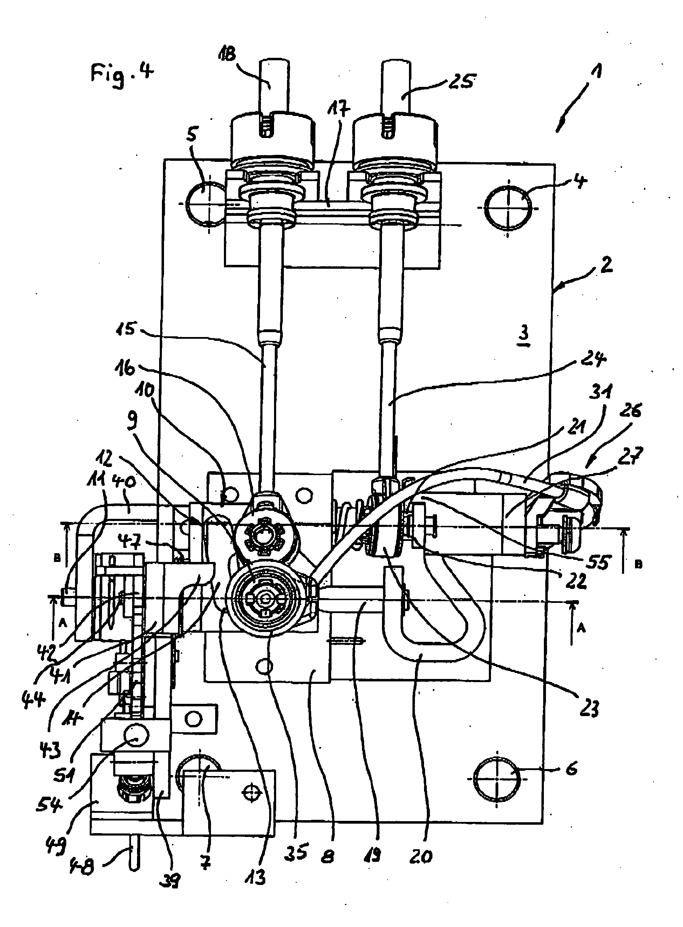

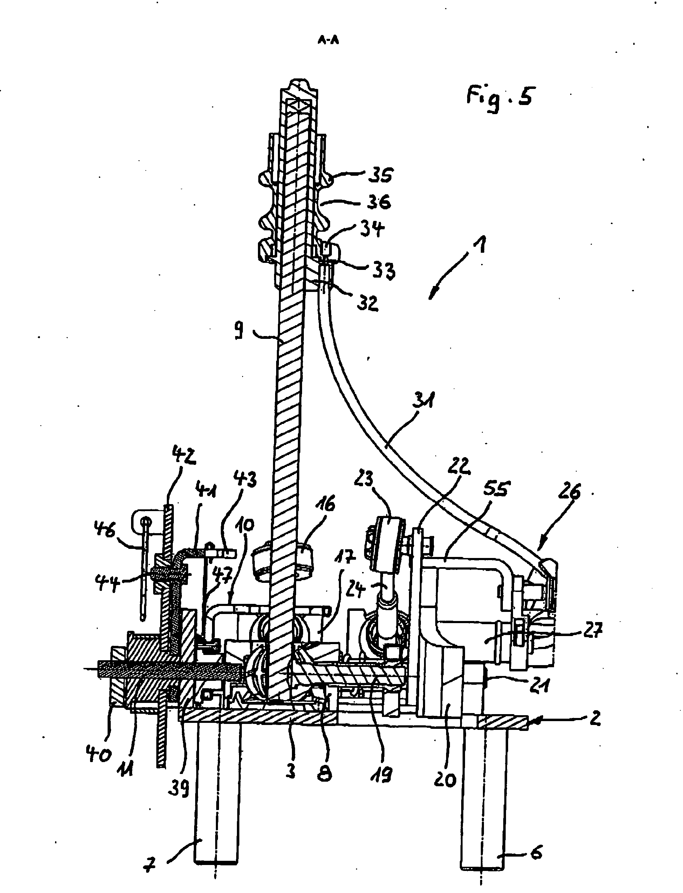

Oberhalb des Lagerblocks 8 durchsetzt der Betätigungshandhebel 9 ein im Querschnitt (Figur 5) L-förmiges Kulissenblech 10, das um eine Achse 11 schwenkbar gelagert ist. Obenseitig hat das Kulissenblech 10 eine ebenfalls L-förmige Kulissenausnehmung 12 mit einem sich in der Ebene A-A (Figur 4) erstreckenden, eine Wählgasse definierenden ersten Abschnitt 13 und einen davon nahezu rechtwinklig abzweigenden zweiten Abschnitt 14. Die Breite des ersten Abschnitts 13 entspricht bis auf ein notwendiges Spiel dem Durchmesser des Betätigungshandhebels 9. An dem Kulissenblech 10 angelenkt ist eine Schaltkraftübertragungsstange 15 über ein Kuppelgelenk 16. Die Schaltkraftübertragungsstange 15 geht zu einem Stützblech 17, an dem sich ein hier nur verkürzt dargestellter Betätigungszug (Bowdenzug) 18 abstützt. Dessen hier nicht zu sehende, Zug- und Druckkraft übertragende Betätigungsseele ist einerends mit der Schaltkraftübertragungsstange 15 und anderenends mit einem Schaltgestänge eines Getriebes (nicht gezeigt) verbunden.

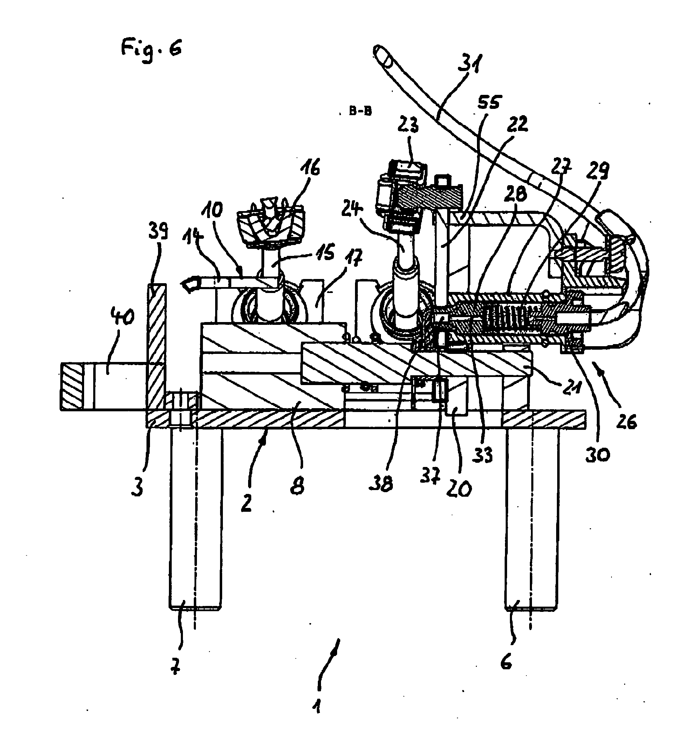

Mit dem Betätigungshandhebel 9 starr verbunden ist eine sich von diesem quer erstreckende Betätigungsstange 19. Deren Längsachse schneidet den Mittelpunkt der Lagerpfanne des Lagerbocks 8. Die Längsachse der Betätigungsstange 19 verläuft parallel zur Längserstreckung des ersten Abschnittes 13 der Kulissenausnehmung 12. Das freie Ende der Betätigungsstange 19 ist sphärisch ausgebildet und greift gelenkig in ein U-Blech 20, das auf einer Achse 21 (vgl. Figur 6) drehbar gelagert ist. Neben einem Schenkel des U-Blechs 20 ist ein Schwenkhebel 22 ebenfalls auf der Achse 21 frei drehbar gelagert. Am oberen Ende des Schwenkhebels 22 ist über ein Kuppelgelenk 23 eine Wählkraftübertragungsstange 24 angelenkt, die im Wesentlichen parallel zu der Schaltkraftübertragungsstange 15 zu dem Stützblech 17 geht und dort mit einem ebenfalls nur teilweise dargestellten Betätigungszug (Bowdenzug) 25 verbunden ist, der sich an dem Stützblech 17 abstützt.

Oberhalb der Achse 21 ist an dem dort verlaufenden Abschnitt des U-Blechs 20 eine Kopplungseinrichtung 26 angeordnet. Sie hat ein Zylindergehäuse 27, das in das U-Blech 20 eingesetzt ist und in dem ein Kopplungsbolzen 28 parallel zur Achse 21 beweglich geführt ist. Der Kopplungsbolzen 28 ist mit einer Druckfeder 29 in Richtung auf den Schwenkhebel 22 federbeaufschlagt. Das Zylindergehäuse 27 ist am hinteren Ende mit einem Deckel 30 versehen, an den sich ein Betätigungszug (Bowdenzug) 31 anschließt. Der Betätigungszug 31 geht in einem Bogen zu einem Ringsteg 32, der ortsfest an dem Betätigungshandhebel 9 gehalten ist. In dem Betätigungszug 31 verläuft eine Betätigungsseele 33 in Form eines Drahtzuges. Dessen oberes, verdicktes Ende 34 ist mit einer den Betätigungshandhebel 9 oberhalb des Ringsteges 32 umgebenden Muffe 35 verbunden, die axial verschieblich auf dem Betätigungshandhebel 9 sitzt und eine Ringnut 36 ausformt. Mit dem anderen Ende durchsetzt die Betätigungsseele 33 den Deckel 30, den Innenraum der Druckfeder 29 und den Kopplungsbolzen 28 bis zu dessen vorderen Ende und stützt sich dort mit seinem verdickten Ende 37 ab.

In der gezeigten Darstellung (insbesondere Figur 6) durchfasst das vordere, aus dem Zylindergehäuse 27 herausragende Ende des Kopplungsbolzens 28 ein passendes Loch 38 in dem Schwenkhebel 22. Auf diese Weise ist der Schwenkhebel 22 drehfest mit dem U-Blech 20 gekoppelt, macht deshalb eine Bewegung des U-Blechs 20 mit. Durch Hochschieben der Muffe 35 kann der Kopplungsbolzen 28 gegen die wirkung der Druckfeder 29 in das Zylindergehäuse 27 zurückgezogen werden mit der Folge, dass dessen vorderes Ende aus dem Loch 38 herausfährt. Dies entkoppelt den Schwenkhebel 22 von dem U-Blech 21 mit der Folge, dass dessen Bewegung nicht mehr auf den Schwenkhebel 22 übertragen wird.

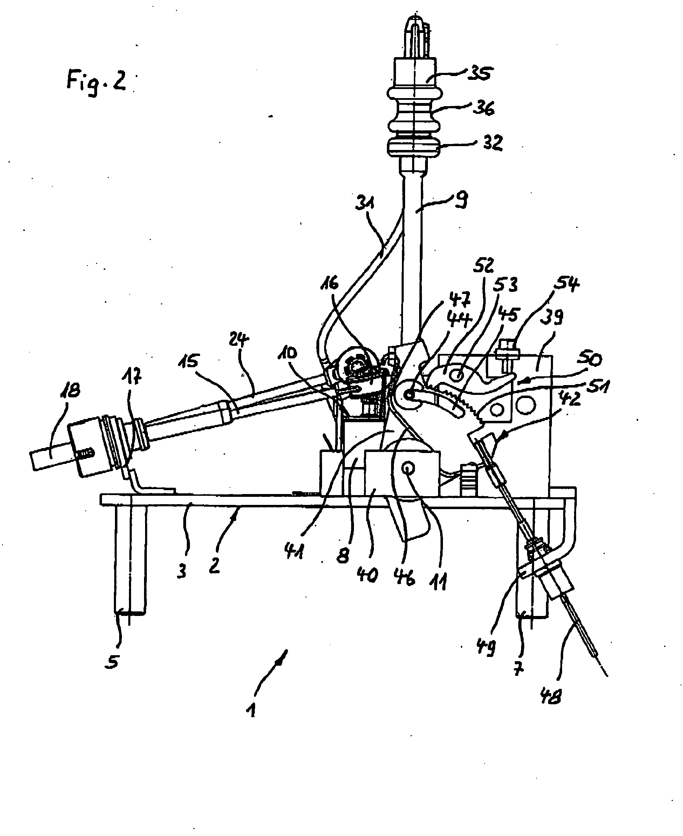

Die Achse 11, auf der das Kulissenblech 10 schwenkbar gelagert ist, ist in dem Lagerblock 8, einem von der Konsolenplatte 3 hochstehenden Halteplatte 39 und am freien Ende in einem von der Halteplatte 39 abgehenden Lagerschenkel 40 gehalten. Zwischen Halteplatte 39 und Lagerschenkel 40 sind ein erster Schwenkhebel 41 und ein zweiter Schwenkhebel 42 nebeneinander um die Achse 11 verschenkbar gelagert. Der erste Schwenkhebel 41 weist einen in Richtung auf den Betätigungshandhebel 9 gerichteten Nocken 43 auf. Auf der anderen Seite hat der erste Schwenkhebel 41 einen Mitnahmebolzen 44, der in ein Langloch 45 einfasst, das in den zweiten Schwenkhebel 42 eingeformt ist. Der zweite Schwenkhebel 42 wird von einer um die Achse 11 herumgewickelten Ringfeder 46 beaufschagt, die in der Darstellung gemäß Figur 2 gegen den Uhrzeigersinn wirkt. Über eine weitere, schwächere Ringfeder 47 ist der erste Schwenkhebel 41 in entgegengesetzter Richtung federbeaufschlagt, so dass er in einer Ausgangsstellung gegen einen Anschlag an der Halteplatte 39 anliegt.

An den zweiten Schwenkhebel 42 angehängt ist ein Betätigungszug (Bowdenzug) 48, der sich an einem Halteblech 49 abstützt. Eine Schwenkbewegung des zweiten Schwenkhebels 42 wird auf diese Weise in eine Translationsbewegung des Betätigungszuges 48 umgewandelt. Das hier nicht dargestellte Ende des Betätigungszuges 48 ist mit einer Parkbremse verbunden.

Oberhalb des Langlochs 45 ist eine Blockiereinrichtung 50 vorgesehen, die im Wesentlichen von zwei Elementen gebildet wird. Zum einen weist der zweite Schwenkhebel 42 in diesem Bereich eine Ratschenverzahnung 51 auf, in die zum anderen ein Klinkenhebel 52 einfasst, der an der Halteplatte 39 um eine zur Achse 11 parallelen Achse 53 schwenkbar gelagert ist. Der Klinkenhebel 52 greift in die Ratschenverzahnung 51 derart ein, dass sich der zweite Schwenkhebel 42 in der Darstellung gemäß Figur 2 gegen den Uhrzeigersinn bewegen kann, nicht jedoch umgekehrt. Soll er in letzterer Richtung beweglich sein, muss der Klinkenhebel 42 im Uhrzeigersinn verschwenkt werden. Hierzu ist ein Freigabeknopf 54 vorgesehen, bei dessen Beaufschlagung von oben der Klinkenhebel 52 im Uhrzeigersinn verschwenkt wird und damit aus dem Eingriff mit der Ratschenverzahnung 51 kommt. Nach Loslassen des Freigabeknopfes 54 schwenkt der Klinkenhebel 52 wieder in den Eingriff mit der Ratschenverzahnung 51 zurück, und legt den zweiten Schwenkhebel 42 fest.

In der in allen Figuren gezeigten Stellung befindet sich der Betätigungshandhebel 9 in einer Ausgangsstellung (Leerlauf- oder Wählstellung), und zwar in einer ersten Schaltgasse. Durch verschwenken des Betätigungshandhebels 9 in Richtung auf das Stützblech 17 wird das Kulissenblech 10 mit verschwenkt, was zur Folge hat, dass die Schaltkraftübertragungsstange 15 in Richtung auf das Stützblech 17 gestoßen wird. Über den Betätigungszug 18 wird die Kraft auf das Getriebe übertragen und führt dann zum Einlegen des ersten Gangs. Für den zweiten Gang wird der Betätigungshandhebel 9 in entgegengesetzter Richtung verschwenkt. Dabei führt die Betätigungsstange 19 lediglich eine Drehbewegung um ihre Längsachse aus mit der Folge, dass die Bewegung des Betätigungshandhebels 9 nicht zu einer Bewegung des U-Blechs 20 und der daran anschließenden Teile führt.

Soll der dritte Gang (oder der vierte Gang) eingelegt werden, wird der Betätigungshandhebel 9 in dem ersten Abschnitt 13 (Wählgasse) der Kulissenausnehmung 12 zunächst von hinten gesehen (vgl. Figur 13) nach rechts in eine zweite Schaltgasse verschwenkt. Dies lässt die Betätigungsstange 19 nach unten schwenken, was wiederum eine Drehbewegung des U-Blechs 20 um die Achse 21 zur Folge hat, und zwar in der Ansicht gemäß Figur 2 im Uhrzeigersinn. Die Drehbewegung des U-Blechs 20 wird vermittels der Kopplungseinrichtung 26 auf den Schwenkhebel 22 übertragen und nimmt diesen mit. Dessen Schwenkbewegung wird in eine Translationsbewegung der Wählkraftübertragungsstange 24 übertragen, und dessen Bewegung auf den Betätigungszug 25. Dessen hier nicht dargestelltes Ende führt zu einer Wählbewegung am Getriebe. Wird nun der Betätigungshandhebel 9 aus der neutralen Stellung in der Wählgasse (Leerlaufstellung) in Richtung auf das Stützblech 17 - also in der zweiten Schaltgasse - bewegt, wird das Kulissenblech 10 wie bei dem Schalten des ersten Gangs verschwenkt und damit die Bewegung des Betätigungshandhebels 9 auf die Schaltkraftübertragungsstange 15 und anschließend auf den Betätigungszug 18 übertragen. Damit wird der dritte Gang geschaltet. Bei Bewegung des Betätigungshandhebels 9 in entgegengesetzter Richtung kommt es zum Schalten des vierten Gangs.

Soll die Parkbremse betätigt werden, ist es erforderlich, dass der Betätigungshandhebel 9 in der Wählgasse (Abschnitt 13) in Richtung auf die Schwenkhebel 41, 42 bis zum Beginn des zweiten Abschnittes 14 der Kulissenausnehmung 12 zu verschwenken und anschließend nach vorn in den zweiten Abschnitt 14 der Kulissenausnehmung 12 zu bewegen. Aufgrund dieses zweiten Abschnittes 14 unterbleibt eine Übertragung der Bewegung des Betätigungshandhebels 9 auf das Kulissenblech 10 und damit auf die Schaltkraftübertragungsstange 15.

Allerdings ist die vorbeschriebene Schwenkbewegung des Betätigungshandhebels 9 solange nicht möglich, solange die Kopplungseinrichtung 26 bzw. der Kopplungsbolzen 28 in Kopplungsstellung befindlich ist, der Kopplungsbolzen 28 also in das Loch 38 in dem Schwenkhebel 22 einfasst und folglich dieser mit dem U-Blech 20 drehfest gekoppelt ist. Die Schwenkbewegung des Betätigungshandhebels 9 hätte nämlich zur Folge, dass das freie Ende der Betätigungsstange 19 nach oben verschwenken und dabei das U-Blech 20 und den damit gekoppelten Schwenkhebel 22 zu einer Drehbewegung um die Achse 21 veranlassen würde, in diesem Fall jedoch in der Ansicht gemäß Figur 2 entgegen dem Uhrzeigersinn. Dies ist jedoch nicht möglich, da der Schwenkhebel 22 in dieser Richtung an einem Anschlagblech 55 - im übrigen federbeaufschlagt - anliegt. Damit die Schwenkbewegung des Betätigungshandhebels 9 gleichwohl ausgeführt werden kann, ist es zuvor erforderlich, den Kopplungsbolzen 28 mit Hilfe des Betätigungszuges 25 aus dem Eingriff mit dem Schwenkhebel 22 herauszuziehen. Dies geschieht durch Anheben der Muffe 35 am Betätigungshandhebel 9 von Hand. Erst dann ist die Betätigung der Parkbremse möglich.

Durch Bewegung des Betätigungshandhebels 9 in dem zweiten Abschnitt 14 nach vorn, wird der Nocken 43 mitgenommen. Dies führt zu einer Schwenkbewegung des ersten Schwenkhebels 41 (in Figur 2 entgegen dem Uhrzeigersinn) unter Mitnahme des zweiten Schwenkhebels 42 über den Mitnahmebolzen 44. Dabei wird der Betätigungszug 48 in Zugrichtung beaufschlagt mit der Folge, dass die Parkbremse betätigt wird. In der gewünschten Parkstellung wird der Betätigungshandhebel angehalten, wobei der zweite Schwenkhebel 42 und damit der Betätigungszug 48 über die Blokkiereinrichtung 50, d.h. den Eingriff des Klinkenhebels 42 in die Ratschenverzahnung 41, blockiert wird. Nach Loslassen des Betätigungshandhebels 9 wird der erste Schwenkhebel 41 unter Einwirkung der Ringfeder 47 zurückgeschwenkt und nimmt dabei den Betätigungshandhebel 9 mit. Dabei durchläuft der Mitnahmebolzen 44 das Langloch 45.

Zum Lösen der Parkbremse wird der Freigabeknopf 53 niedergedrückt, was den Klinkenhebel 52 in die Freigabestellung verschwenkt. Die von dem Betätigungszug 48 auf den zweiten Schwenkhebel 42 wirkende Zugkraft lässt den zweiten Schwenkhebel 42 wieder in seine in Figur 2 gezeigte Ausgangsstellung zurückschwenken. Beim verschwenken des Betätigungshandhebels 9 in der Wählgasse in die Ausgangsstellung (erste Schaltgasse) verschwenkt die Betätigungsstange 19 wieder in ihre waagerechte Ausgangslage (vgl. Figur 5) und verdreht dabei das U-Blech 20 ebenfalls wieder in seine Ausgangsstellung. Hierdurch kommt der Kopplungsbolzen 18 vor das Kopplungsloch 38 zu liegen, so dass das freie Ende des Kopplungsbolzens 28 aufgrund der Einwirkung der Druckfeder 29 in das Kopplungsloch 38 einschnappt und damit die Drehverbindung zwischen U-Blech 20 und Schwenkhebel 22 wieder herstellt. Damit können erneut sämtliche Schaltvorgänge durch entsprechende Betätigung des Betätigungshandhebels 9 bewirkt werden.

## Patentansprüche

1. Betätigungseinrichtung (1) zum Schalten eines Getriebes und zur Aktivierung einer Parkbremse, mit einer Betätigungskonsole (2), auf der ein Betätigungshandhebel (9) in einem Schaltbewegungsbereich (13) mit wenigstens zwei nebeneinander liegenden Schaltgassen für das Schalten des Getriebes und daneben in einem Parkbewegungsbereich (14) zur Aktivierung der Parkbremse beweglich gelagert ist, wobei der Betätigungshandhebel (9) mit einer Schaltkraftübertragungseinrichtung zur Übertragung von Schaltkraft für das Getriebe gekoppelt und dem Betätigungshandhebel (9) eine Parkkraftübertragungseinrichtung zur Übertragung von Parkkraft für die Parkbremse zugeordnet ist und wobei eine lösbare Blockiereinrichtung zur Festlegung des Betätigungshandhebels (9) oder der Parkkraftübertragungseinrichtung in zumindest einer Parkstellung vorgesehen ist und wobei der Betätigungshandhebel (9) in dem Schaltbewegungsbereich (13) derart von der Parkkraftübertragungseinrichtung entkoppelt ist, dass eine Parkkraft nicht übertragbar ist, und wobei der Betätigungshandhebel (9) in dem Parkbewegungsbereich (14) von der Schaltkraftübertragungseinrichtung derart entkoppelt ist, dass eine Schaltkraft nicht übertragbar ist, **dadurch gekennzeichnet, dass** die Schaltkraftübertragungseinrichtung wenigstens ein Schaltkraftübertragungselement und wenigstens ein Wählkraftübertragungselement (22) aufweist und dass eine Wählkraftkopplungseinrichtung (26) vorgesehen ist, mittels der das Wählkraftübertragungselement (22) mit dem Betätigungshandhebel (9) koppelbar und für dessen Bewegung in den oder im Parkbewegungsbereich (14) entkoppelbar ist oder entkoppelt wird.

2. Betätigungseinrichtung nach Anspruch 1, **dadurch gekennzeichnet, dass** die Wählkraftkopplungseinrichtung (26) mit einem Handbetätigungselement (35) verbunden ist, über die die Kopplung und Entkopplung von Hand herstellbar ist.

3. Betätigungseinrichtung nach Anspruch 2, **dadurch gekennzeichnet, dass** das Handbetätigungselement (35) am Betätigungshandhebel (9) angeordnet ist.

4. Betätigungseinrichtung nach einem der Ansprüche 1 bis 3, **dadurch gekennzeichnet, dass** die Wählkraftkopplungseinrichtung (26) einen beweglich geführten Kopplungsbolzen (28) aufweist, der im gekoppelten Zustand eine Kopplung zwischen Betätigungshandhebel (9) und Wählkraftübertragungselement (22) herstellt.

5. Betätigungseinrichtung nach einem der Ansprüche 1 bis 4, **dadurch gekennzeichnet, dass** der wählkraftübertragungseinrichtung (22) im Kraftfluss nach der wählkraftkopplungseinrichtung (26) ein Anschlag (55) zugeordnet ist, der in gekoppeltem Zustand der Wählkraftkopplungseinrichtung (26) eine Bewegung des Betätigungshandhebels (9) in den oder im Parkbewegungsbereich (14) blockiert.

6. Betätigungseinrichtung nach einem der Ansprüche 1 bis 5, **dadurch gekennzeichnet, dass** der Schaltbewegungsbereich (13) wenigstens eine Schaltgasse und der Parkbewegungsbereich (14) über eine Bewegung des Betätigungshandhebels (9) quer zur Schaltgasse erreichbar ist.

7. Betätigungseinrichtung nach Anspruch 6, **dadurch gekennzeichnet, dass** die Parkkraftübertragungseinrichtung derart ausgebildet ist, dass der Betätigungshandhebel (9) im Parkbewegungsbereich (14) zur Aktivierung der Parkübertragungseinrichtung parallel zur Schaltgasse zu bewegen ist.

8. Betätigungseinrichtung nach einem der Ansprüche 1 bis 7, **dadurch gekennzeichnet, dass** eine Bremskraftübertragungseinrichtung einen in den Parkbewegungsbereich (14) hineinragenden, schwenkbar gelagerten Parkkraftübertragungshebel (41) aufweist, der mit einem Parkkraftübertragungselement (48) verbunden ist.

9. Betätigungseinrichtung nach Anspruch 8, **dadurch gekennzeichnet, dass** der Parkkraftübertragungshebel (41) eine Schwenkachse (11) hat, die sich parallel zur Bewegungsrichtung des Betätigungshandhebels (9) beim Übergang vom Schalt- zum Parkbewegungsbereich (13, 14) erstreckt.

10. Betätigungseinrichtung nach Anspruch 8 oder 9, **dadurch gekennzeichnet, dass** die Blockiereinrichtung (50) als Rasteinrichtung mit einem Klinkenhebel (52) und einer Klinkenverzahnung (51) ausgebildet ist, die mit dem Parkkraftübertragungshebel (41) zusammenwirken.

11. Betätigungseinrichtung nach Anspruch 10, **dadurch gekennzeichnet, dass** der Klinkenhebel (52) zum Lösen der Blockiereinrichtung (50) von Hand derart betätigbar ist, dass er in eine Freigabestellung bewegbar ist.

## Claims

1. An actuation device (1) for shifting gears and for activating a parking brake, having an actuation console (2) on which an actuation hand lever (9) is moveably mounted within a shift movement range (13) with at least two shift gates lying next to one another for shifting the gears and next to this within a parking movement range (14) for activating the parking brake, the actuation hand lever (9) being coupled to a shift force transmission device for transmitting shift force for the gearbox and a parking force transmission device being assigned to the actuation hand lever (9) for transmitting parking force for the parking brake, and a releaseable blocking device being provided for securing the actuation hand lever (9) or the parking force transmission device in at least one parking position, and the actuation hand lever (9) in the shift movement range (13) being uncoupled from the parking force transmission device such that a parking force can not be transmitted, and the actuation hand lever (9) in the parking movement range (14) being uncoupled from the shift force transmission device such that a shift force can not be transmitted, **characterised in that** the shift force transmission device has at least one shift force transmission element and at least one selection force transmission element (22), and that a selection force coupling device (26) is provided by means of which the selection force transmission element (22) into or within the parking movement range (14).

2. The actuation device according to Claim 1, **characterised in that** the selection force coupling device (26) is connected to a manual actuation element (35) by means of which the coupling and uncoupling can be implemented manually.

3. The actuation device according to Claim 2, **characterised in that** the manual actuation element (35) is disposed on the actuation hand lever (9).

4. The actuation device according to any of Claims 1 to 3, **characterised in that** the selection force coupling device (26) has a moveably operated coupling pin (28) which in the coupled state establishes coupling between the actuation hand lever (9) and the selection force transmission element (22).

5. The actuation device according to any of Claims 1 to 4, **characterised in that** in the flow of forces a stop (55) is assigned to the selection force transmission device (22) after the selection force coupling device (26), in the coupled state of the selection force coupling device (26) said stop (55) blocking a movement of the actuation hand lever (9) into or within the parking movement range (14).

6. The actuation device according to any of Claims 1 to 5, **characterised in that** the shift movement range (13) can be reached by means of at least one shift gate and the parking movement range (14) by means of a movement of the actuation hand lever (9) laterally to the shift gate.

7. The actuation device according to Claim 6, **characterised in that** the parking force transmission device is designed such that in the parking movement range (14) the actuation hand lever (9) is to be moved parallel to the shift gate in order to activate the parking transmission device.

8. The actuation device according to any of Claims 1 to 7, **characterised in that** a braking force transmission device has a pivotably mounted parking force transmission lever (41) projecting into the parking movement range (14) which is connected to a parking force transmission element (48).

9. The actuation device according to Claim 8, **characterised in that** the parking force transmission lever (41) has a pivot axis (11) which extends parallel to the direction of movement of the actuation hand lever (9) upon passing from the shift to the parking movement range (13, 14).

10. The actuation device according to Claim 8 or 9, **characterised in that** the blocking device (50) is in the form of a locking device with a ratchet lever (52) and ratchet toothing (51) which interact with the parking force transmission lever (41).

11. The actuation device according to Claim 10, **characterised in that** the ratchet lever (52) for releasing the blocking device (50) can be actuated manually such that it can be moved into a release position.

## Revendications

1. Dispositif d'actionnement (1) pour l'accouplement d'une transmission et l'activation d'un frein de stationnement, avec une console d'actionnement (2) sur laquelle un levier manuel d'actionnement (9) est logé de manière mobile dans une zone de mouvement de commutation (13) avec au moins deux couloirs de commutation se trouvant l'un à côté de l'autre pour l'accouplement de la transmission et à côté dans une zone de mouvement de stationnement (14) pour l'activation du frein de fonctionnement, sachant que le levier manuel d'actionnement (9) est accouplé avec un dispositif de transfert de force de commutation en vue du transfert de force de commutation pour la transmission et un dispositif de transfert de force de stationnement est affecté au levier manuel d'actionnement (9) en vue du transfert de la force de stationnement pour le frein de stationnement et sachant qu'un dispositif de blocage détachable est prévu pour la fixation du levier manuel d'actionnement (9) ou du dispositif de transfert de la force de stationnement dans au moins une position de stationnement et sachant que le levier manuel d'actionnement (9) est découplé du dispositif de transfert de force de stationnement dans la zone de mouvement de commutation, de telle manière qu'une force de stationnement n'est pas transférable et sachant que le levier manuel d'actionnement (9) est découplé dans la zone de mouvement de stationnement (14) du dispositif de transfert de la force de commutation de telle manière qu'une force de commutation n'est pas transférable, **caractérisé en ce que** le dispositif de transfert de la force de commutation présente au moins un élément de transfert de la force de commutation et au moins un élément de transfert de force de sélection (22) et qu'un dispositif d'accouplement de force de sélection (26) est prévu, au moyen duquel l'élément de transfert de la force de sélection (22) peut être accouplé avec le levier manuel d'actionnement (9) et pour le mouvement duquel peut être découplé ou est découplé dans les ou la zone de mouvement de stationnement (14).

2. Dispositif d'actionnement selon revendication 1, **caractérisé en ce que** le dispositif d'accouplement de la force de sélection (26) est relié à un élément d'actionnement manuel (35) par lequel l'accouplement ou le découplement est réalisable manuellement.

3. Dispositif d'actionnement selon revendication 2, **caractérisé en ce que** l'élément d'actionnement manuel (35) est placé au niveau du levier d'actionnement manuel (9).

4. Dispositif d'actionnement selon l'une des revendications 1 à 3, **caractérisé en ce que** le dispositif d'accouplement de la force de sélection (26) présente un boulon d'accouplement (28) inséré de manière mobile qui crée à l'état accouplé un accouplement entre le levier manuel d'actionnement (9) et l'élément de transfert de la force de sélection (22).

5. Dispositif d'actionnement selon l'une des revendications 1 à 4, **caractérisé en ce qu'**une butée est placée au niveau du dispositif de transfert de la force de sélection (22) dans l'écoulement de force après le dispositif d'accouplement de force de sélection (26), qui bloque dans l'état couplé du dispositif d'accouplement de la force de sélection (26) un mouvement du levier d'actionnement manuel (9) dans les ou la zone de mouvement de stationnement (14).

6. Dispositif d'actionnement selon l'une des revendications de 1 à 5, **caractérisé en ce que** la zone de mouvement de commutation (13) présente au moins un couloir de commutation et la zone de mouvement de stationnement (14) peut être atteinte par un mouvement du levier d'actionnement manuel (9) parallèlement au couloir de commutation.

7. Dispositif d'actionnement selon revendication 6, **caractérisé en ce que** le dispositif de transfert de la force de stationnement est conçu de telle manière que le levier d'actionnement manuel (9) doit être déplacé parallèlement au couloir de commutation pour l'activation du dispositif de transfert de stationnement.

8. Dispositif d'actionnement selon l'une des revendications 1 à 7, **caractérisé en ce qu'**un dispositif de transfert de la force de freinage présente un levier de transfert de force de stationnement (41) logé de manière pivotante, avançant dans la zone de mouvement de stationnement, qui est relié avec un élément de transfert de la force de stationnement (48).

9. Dispositif d'actionnement selon revendication 8, **caractérisé en ce que** le levier de transfert de force de stationnement (41) a un axe pivotant (11) qui se prolonge parallèlement au sens de mouvement du levier d'actionnement manuel (9) au niveau de l'intersection de la zone de mouvement de commutation et de stationnement (13, 14).

10. Dispositif d'actionnement selon revendication 8 ou 9, **caractérisé en ce que** le dispositif de blocage (50) est formé en tant que dispositif de retenue avec un levier à cliquet (52) et une denture à encliquetage (51) qui agissent en interaction avec le levier de transfert de la force de stationnement (41).

11. Dispositif d'actionnement selon revendication 10, **caractérisé en ce que** le levier à cliquet (52) peut être actionné manuellement pour le desserrage du dispositif de blocage (50) de telle manière qu'il peut être déplacé dans la position de déblocage.
